(19) Europäisches Patentamt / European Patent Office / Office européen des brevets

(11) **EP 4 383 289 A1**

(12) **EUROPEAN PATENT APPLICATION**
published in accordance with Art. 153(4) EPC

(43) Date of publication:
**12.06.2024 Bulletin 2024/24**

(21) Application number: **22852637.2**

(22) Date of filing: **23.05.2022**

(51) International Patent Classification (IPC):
**H01F 41/02** (2006.01)    **H01F 27/245** (2006.01)
**G06F 30/23** (2020.01)

(52) Cooperative Patent Classification (CPC):
**G06F 30/23; H01F 27/245; H01F 41/00;**
**H01F 41/02**

(86) International application number:
**PCT/JP2022/021162**

(87) International publication number:
**WO 2023/013208 (09.02.2023 Gazette 2023/06)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.08.2021 JP 2021129261**

(71) Applicant: **JFE Steel Corporation**
**Tokyo 100-0011 (JP)**

(72) Inventor: **NAMIKAWA, Misao**
**Tokyo 100-0011 (JP)**

(74) Representative: **Haseltine Lake Kempner LLP**
**Bürkleinstrasse 10**
**80538 München (DE)**

(54) **ELASTIC MATRIX DETERMINATION METHOD AND VIBRATION ANALYSIS METHOD FOR LAMINATE CORE OF TRANSFORMER**

(57)    A transformer stacked iron core elasticity matrix determination method including: a step of acquiring a frequency spectrum of excitation noise; a step of acquiring a frequency spectrum of excitation magnetostriction; a step of calculating a frequency spectrum of a vibration response function when first and second provisional values of transverse elastic moduli are applied to an elasticity matrix; a step of calculating a frequency spectrum of excitation vibration based on frequency spectrum data of the excitation magnetostriction and the frequency spectrum of the vibration response function; a step of calculating a degree of coincidence between a frequency spectrum of noise and the frequency spectrum of the excitation vibration; a step of calculating the degree of coincidence for each combination of the first provisional value and the second provisional value; and a step of adopting the first and second provisional values as the transverse elastic moduli when the degree of coincidence is a local maximum value.

*FIG. 3*

```
                    START
                      │
S1   ACQUIRE NOISE FREQUENCY SPECTRUM MEASUREMENT RESULTS
                      │
S2   ACQUIRE EXCITATION MAGNETOSTRICTION FREQUENCY SPECTRUM DATA
                      │
S3   CALCULATE VIBRATION RESPONSE FUNCTION FREQUENCY SPECTRUM
     FOR PROVISIONAL VALUE OF TRANSVERSE ELASTIC MODULUS
                      │
S4   CALCULATE EXCITATION VIBRATION FREQUENCY SPECTRUM
                      │
S5   CALCULATE DEGREE OF COINCIDENCE BETWEEN NOISE MEASUREMENT RESULT
     AND EXCITATION VIBRATION CALCULATION RESULT
                      │
S6          MAPPING COMPLETE? ──── NO
                      │ YES
S7   ADOPT PROVISIONAL VALUE WHEN DEGREE OF COINCIDENCE IS
     LOCAL MAXIMUM VALUE AS TRANSVERSE ELASTIC MODULUS
                      │
                     END
```

EP 4 383 289 A1

**Description**

TECHNICAL FIELD

The present disclosure relates to a transformer stacked iron core elasticity matrix determination method and a vibration analysis method. Further, the present disclosure relates to a method using a computer to calculate mechanical vibration properties of a transformer iron core produced by stacking electrical steel sheets.

BACKGROUND

Analyzers are known that calculate for each finite element a nodal force equivalent to the strain at each node or each finite element in accordance with magnetic flux density, based on a numerical analysis model that represents, by a combination of multiple finite elements in a finite element method analysis, an electromagnetic component containing magnetic material in which magnetostriction is generated (see, for example, Patent Literature (PTL) 1).

CITATION LIST

Patent Literature

PTL 1: JP 2014-71689 A

SUMMARY

(Technical Problem)

In a transformer configured by winding a coil around a stacked iron core of electrical steel sheets, vibration of the iron core caused by magnetostriction generates noise. Structural analysis is required to contribute to a design that reduces transformer noise.
It would be helpful to provide a transformer stacked iron core elasticity matrix determination method and a vibration analysis method, to contribute to a design that reduces transformer noise.

(Solution to Problem)

A transformer stacked iron core elasticity matrix determination method according to an embodiment of the present disclosure determines elasticity matrices of a stacked iron core of a transformer. The stacked iron core is configured as a plurality of electrical steel sheets and includes at least a first portion and a second portion. A constitutive equation represents a relationship between stress and strain in the first portion and the second portion, respectively, and includes elasticity matrices that are different from each other. Each of the elasticity matrices includes, as elements of the elasticity matrix, transverse elastic moduli in two planes including the stacking direction of the stacked iron core.
The transformer stacked iron core elasticity matrix determination method comprises:

a first step of acquiring a frequency spectrum of excitation noise of the stacked iron core of the transformer;
a second step of acquiring a frequency spectrum of excitation magnetostriction of the electrical steel sheets;
a third step of determining, for the stacked iron core of the transformer, a first provisional value of the transverse elastic moduli in two planes including the stacking direction of the first portion and a second provisional value of the transverse elastic moduli in two planes including the stacking direction of the second portion, and calculating a frequency spectrum of a vibration response function of the stacked iron core of the transformer when the first provisional value and the second provisional value are applied to the elasticity matrices;
a fourth step of calculating a frequency spectrum of excitation vibration of the stacked iron core of the transformer, based on frequency spectrum data of the excitation magnetostriction of the electrical steel sheets acquired in the second step and the frequency spectrum of the vibration response function of the stacked iron core of the transformer calculated in the third step;
a fifth step of calculating a degree of coincidence between the frequency spectrum of the noise of the stacked iron core of the transformer acquired in the first step and the frequency spectrum of the excitation vibration of the stacked iron core of the transformer calculated in the fourth step;
a sixth step of calculating the degree of coincidence for each combination of the first provisional value and the second provisional value by changing the first provisional value and the second provisional value respectively and repeating the third step to the fifth step; and

a seventh step of detecting a local maximum value of the degree of coincidence calculated for each combination of the first provisional value and the second provisional value in the sixth step, adopting the first provisional value when the degree of coincidence is a local maximum value as the transverse elastic moduli in two planes including the stacking direction of the stacked iron core of the first portion, and adopting the second provisional value when the degree of coincidence is a local maximum value as the transverse elastic moduli in two planes including the stacking direction of the stacked iron core of the second portion.

A vibration analysis method according to an embodiment of the present disclosure comprises a step of executing vibration analysis of the stacked iron core of the transformer based on a constitutive equation representing the relationship between stress and strain in each of the first portion and the second portion, incorporating the transverse elastic moduli determined by the transformer stacked iron core elasticity matrix determination method.

(Advantageous Effect)

According to the transformer stacked iron core elasticity matrix determination method according to the present disclosure, a discrepancy between measured and calculated values of vibration properties may be reduced. Further, the vibration analysis method for a stacked iron core of a transformer according to the present disclosure is able to improve the accuracy of vibration analysis.

BRIEF DESCRIPTION OF THE DRAWINGS

In the accompanying drawings:

FIG. 1 illustrates an example structure of a stacked iron core of a transformer to be analyzed by a vibration analysis method according to an embodiment;
FIG. 2A is a diagram for explaining normal stress in a stacking direction (Z-axis direction) acting on a stacked iron core;
FIG. 2B is a diagram for explaining normal stress in a direction perpendicular to the stacking direction (X-axis direction) acting on the stacked iron core;
FIG. 2C is a diagram for explaining normal stress in a direction perpendicular to the stacking direction (Y-axis direction) acting on the stacked iron core;
FIG. 2D is a diagram for explaining shear stress in the ZX plane acting on the stacked iron core;
FIG. 2E is a diagram for explaining shear stress in the XY plane acting on the stacked iron core;
FIG. 2F is a diagram for explaining shear stress in the YZ plane acting on the stacked iron core;
FIG. 3 is a flowchart illustrating example procedures of an elasticity matrix determination method according to an embodiment;
FIG. 4 is a flowchart illustrating example procedures of an elasticity matrix determination method to be executed when there is not only one local maximum value of degree of coincidence in the procedure of step S7 in FIG. 3;
FIG. 5 is a block diagram illustrating an example structure of a vibration analyzer according to an embodiment;
FIG. 6 is a graph illustrating an example frequency spectrum of transformer noise;
FIG. 7 is a graph illustrating example frequency spectrum data of excitation magnetostriction of electrical steel sheets constituting a stacked iron core of a transformer;
FIG. 8 is a graph illustrating an example frequency spectrum of a vibration response function of a stacked iron core of a transformer;
FIG. 9 is a graph illustrating an example frequency spectrum of excitation vibration of a stacked iron core of a transformer;
FIG. 10A is a graph illustrating an example where one combination of G1 and G2 exists where a degree of coincidence is a local maximum value in a two-dimensional map of the degree of coincidence between a frequency spectrum of excitation vibration and a frequency spectrum of excitation noise of a stacked iron core of a transformer;
FIG. 10B is a graph illustrating an example where two combinations of G1 and G2 exist where a degree of coincidence is a local maximum value in a two-dimensional map of the degree of coincidence between a frequency spectrum of excitation vibration and a frequency spectrum of excitation noise of a stacked iron core of a transformer;
FIG. 11 is a graph illustrating an example frequency spectrum of transformer noise according to an Example;
FIG. 12 is a graph illustrating example frequency spectrum data of excitation magnetostriction of electrical steel sheets constituting a stacked iron core of a transformer according to an Example;
FIG. 13 is a graph illustrating an example frequency spectrum of a vibration response function of a stacked iron core of a transformer according to an Example;
FIG. 14 is a graph illustrating an example frequency spectrum of excitation vibration of a stacked iron core of a transformer according to an Example;

FIG. 15 is a graph illustrating an example of a two-dimensional map of the degree of coincidence between a frequency spectrum of excitation vibration and a frequency spectrum of excitation noise of a stacked iron core of a transformer according to an Example;

FIG. 16 is a graph illustrating an example of a two-dimensional map of the degree of coincidence calculated by excluding one frequency;

FIG. 17 is a graph illustrating an example of a two-dimensional map of the degree of coincidence calculated by excluding two frequencies; and

FIG. 18 is a graph comparing a calculated frequency spectrum of excitation vibration of a stacked iron core of a transformer according to an Example with a measured frequency spectrum of noise obtained by measuring excitation noise of the stacked iron core of the transformer.

DETAILED DESCRIPTION

A transformer, such as a distribution transformer, is constructed by winding a coil around a stacked iron core of stacked electrical steel sheets. Important transformer performance properties include, for example, iron loss (no-load loss) properties, excitation current properties, noise properties, and the like.

Distribution transformers are installed in various locations. Especially for transformers installed in urban areas, there is a strong demand for low noise. Thus, in recent years, taking into consideration the impact on surrounding environment where transformers are installed, noise reduction has become increasingly important as a performance metric of transformers.

Grain-oriented electrical steel sheets that are widely employed as iron core material of transformers vibrate due to material expansion and contraction caused by excitation. Material expansion and contraction due to excitation is also referred to as magnetostriction. Vibration due to magnetostriction is also referred to as magnetostrictive vibration. Magnetostrictive vibration is one of the main causes of noise in transformers. Therefore, noise performance of a transformer may strongly depend on magnetostriction properties of electrical steel sheets employed as iron core material. To reduce transformer noise, electrical steel sheets having low magnetostriction properties may be employed as the transformer iron core material.

However, transformer noise is often not sufficiently reduced even when electrical steel sheets having excellent magnetostriction performance are employed as the iron core material. One possible cause of insufficient noise reduction is the occurrence of resonance phenomena due to close proximity between the natural frequency of a transformer iron core and the frequency of magnetostrictive vibration of electrical steel sheets. Therefore, advance calculation of mechanical vibration properties, such as the natural frequency of a transformer iron core, is extremely important when designing and manufacturing transformers.

Here, use of the finite element method to analyze mechanical vibration properties of electromagnetic components containing magnetic material that generates magnetostriction, such as the iron core of a transformer, may be considered. For example, based on a numerical analysis model that represents an electromagnetic component by a combination of multiple finite elements in a finite element analysis, nodal force equivalent to the strain at each node or each finite element may be calculated for each finite element according to magnetic flux density applied to the electromagnetic component. In such a case, a quasi-static structural analysis is executed using a governing equation for structural analysis consisting of an equilibrium equation, a constitutive equation indicating the relationship between stress and strain, and a relational equation between displacement and strain.

In the quasi-static structural analysis mentioned above, the relationship between stress tensor $\{\sigma\}$ and strain tensor $\{\varepsilon\}$ is expressed by the equation $\{\sigma\} = \{D\}\{\varepsilon\}$. Here, $\{\cdot\}$ represents a tensor. $\{D\}$ is a tensor representing the relationship between strain and stress.

Here, the component representation of the above equation is expressed as in Equation (1).
[Math. 1]

$$\sigma_{ij} = \sum_k \sum_l D_{ijkl} \cdot \varepsilon_{kl} \qquad \cdots (1)$$

In Equation (1), $\{D\}$ is represented by 81 components. $\{\sigma\}$ and $\{\varepsilon\}$ are represented by 9 components, respectively. Here, a tensor as a physical quantity is a symmetric tensor. By considering symmetric components, the number of independent components of $\{\sigma\}$ and $\{\varepsilon\}$ is six each. As a result, the relational equation of the tensor is expressed in matrix form as $[\sigma] = [D][\varepsilon]$, using the symbol $[\cdot]$ to denote the matrix, and further expressed in component form as in Equation (2). Here, $[D]$ is also referred to as the elasticity matrix.
[Math. 2]

$$\begin{bmatrix} \sigma_{xy} \\ \sigma_{yy} \\ \sigma_{zz} \\ \sigma_{yz} \\ \sigma_{zx} \\ \sigma_{xy} \end{bmatrix} = \begin{bmatrix} D_{ij} \end{bmatrix} \begin{bmatrix} \varepsilon_{xy} \\ \varepsilon_{yy} \\ \varepsilon_{zz} \\ \varepsilon_{yz} \\ \varepsilon_{zx} \\ \varepsilon_{xy} \end{bmatrix} \qquad \cdots \ (2)$$

Further, the relationship between normal stress $\sigma i$ and normal strain $\varepsilon i$, and the relationship between shear strain $\tau ij$ and shear strain $\gamma ij$ are expressed using the elasticity matrix [D].

Here, as the elasticity matrix [D], the elastic modulus of a member itself, such as electrical steel sheets that constitute the electromagnetic component subject to structural analysis, may be applied as is. However, it is known that when the elastic modulus of a member itself is applied as the elasticity matrix [D], the difference between the calculated results of mechanical vibration of the electromagnetic component subject to structural analysis and the actual measured results of mechanical vibration may be large. Such a large difference between calculated and measured results has made it difficult to reflect the results of structural analysis using structural analysis programs in the design of electromagnetic components that are stacked structures composed of stacked steel sheets.

Further, iron cores used in transformers such as distribution transformers are also stacked structures composed of stacked steel sheets. Therefore, even when noise was predicted based on the results of structural analysis by a structural analysis program, prediction accuracy was low. The low accuracy of noise prediction sometimes caused actual manufactured transformers to be noisier. When transformers are noisy, problems arise such as extra costs for soundproofing measures such as soundproof walls. In order to reduce noise of a transformer and to suppress the incurring of extra costs, the design of a transformer iron core may be modified. However, when there is a large difference between the calculated and measured results of machine vibration, how design changes may be made to reduce noise is not clear. In order to establish a policy for transformer design changes, the accuracy of noise prediction using structural analysis programs needs to be improved.

When the results of mechanical vibration calculations of the iron core of a transformer subject to structural analysis are compared with the results of actual mechanical vibration measurements, the following are possible causes of large discrepancies between the calculated values and the actual measured values. When the transformer iron core is a stacked structure composed of stacked steel sheets, the elasticity matrix [D] of the stacked structure is inherently different from the elasticity matrix [D] of the components themselves, such as the electrical steel sheets that constitute the stacked iron core of the transformer. Nevertheless, when structural analysis is conducted by substituting the value of the elasticity matrix [D] of the components themselves, such as electrical steel sheets, as is, this may also cause a large discrepancy between the calculated value and the measured value.

Therefore, the elasticity matrix [D] of the stacked structure needs to be determined with high accuracy so that the difference between the calculated and measured results may be reduced. In particular, when conducting vibration analysis of a stacked iron core of stacked steel sheets using a constitutive equation that expresses the relationship between stress and strain in matrix representation, the transverse elastic moduli in two planes including the stacking direction of the transformer stacked iron core in the elasticity matrix [D] in the constitutive equation need to be determined with high accuracy.

It would be helpful to provide a transformer stacked iron core elasticity matrix determination method that is able to determine with high accuracy the transverse elastic moduli in two planes including the stacking direction of the stacked iron core of the transformer in the elasticity matrix in the constitutive equation representing the relationship between stress and strain in a matrix representation. Further, it would be helpful to provide a vibration analysis method able to improve the accuracy of vibration analysis results by analyzing vibration of the stacked iron core of stacked steel sheets using a constitutive equation including the elasticity matrices determined.

Embodiments of an elasticity matrix determination method and a vibration analysis method for a stacked iron core according to the present disclosure are described below, with reference to the drawings. Each drawing is schematic and may differ from actual implementation. Further, the following embodiments are examples of devices or methods for embodying the technical concept of the present disclosure, and are not limiting. In other words, various changes may be made to the technical concept of the present disclosure within the technical scope described in the claims.

(Embodiments)

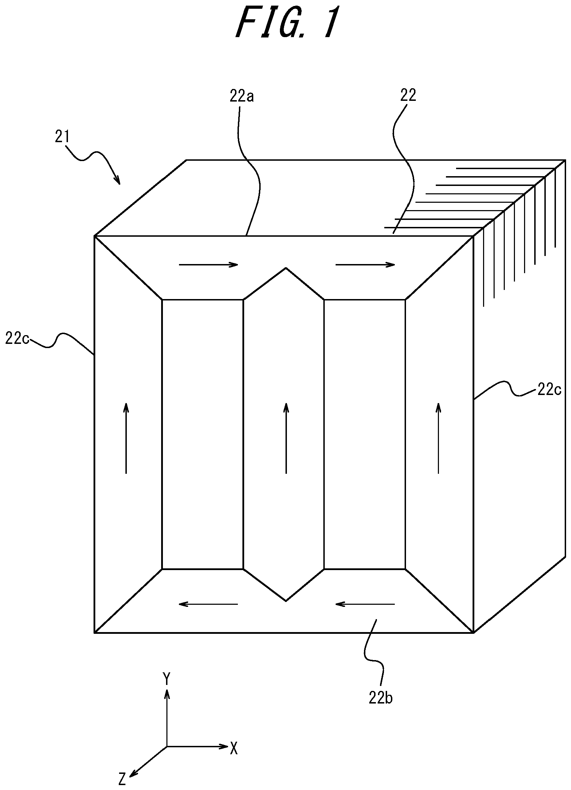

A stacked iron core 21 to be analyzed according to the present embodiment is a stacked iron core of a three-phase three-leg transformer used as a distribution transformer, for example. As illustrated in FIG. 1, the stacked iron core 21 may be composed of a plurality of grain-oriented electrical steel sheets 22 having a defined thickness, with three legs 22c connecting between an upper yoke 22a and a lower yoke 22b. The stacked grain-oriented electrical steel sheets 22 are secured by wrapping with glass tape. The stacked iron core 21 to be analyzed according to the present embodiment is not limited to the stacked iron core of a three-phase three-leg transformer illustrated in FIG. 1.

To numerically analyze vibration of the stacked iron core 21 of a three-phase three-leg transformer, a constitutive equation indicating the relationship between stress and strain is used as the governing equation for elastic structural analysis. The constitutive equation is expressed as in Equation (3) below by substituting the stack with an equivalent homogeneous body and by expressing the effect of stacking in terms of matrix properties.

$$[\sigma] = [C] [\varepsilon] \qquad \ldots(3)$$

$[\sigma]$ is a stress matrix. [C] is an elasticity matrix (stiffness matrix) as a response function. [C] is assumed to be identical to [D], described above, $[\varepsilon]$ is a strain matrix.

As illustrated in FIG. 1, each direction of the stacked iron core 21 is represented by X, Y, and Z axes of an XYZ Cartesian coordinate system. The grain-oriented electrical steel sheets 22 extend along the XY plane and are stacked along the Z axis direction.

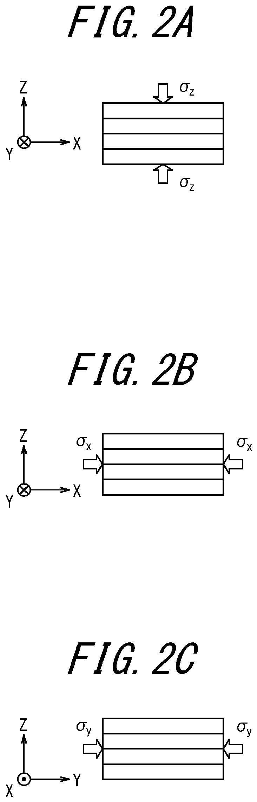

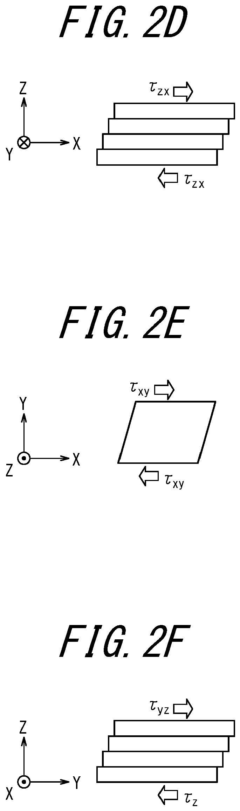

Stress acting on the stacked iron core 21 includes normal components acting in directions normal to the stacked iron core 21 (compressive or tensile directions) and shear components acting in shear directions of the stacked iron core 21. FIG. 2A, FIG. 2B, and FIG. 2C each illustrate normal stresses acting in the Z, X, and Y axis directions, respectively. The normal stresses acting in the Z, X, and Y axis directions are represented by $\sigma z$, $\sigma x$, and $\sigma y$, respectively. FIG. 2D, FIG. 2E, and FIG. 2F each illustrate shear stresses acting in the ZX, XY, and YZ planes, respectively. The shear stresses acting in the ZX, XY and YZ planes are represented by $\tau zx$, $\tau xy$, and $\tau yz$, respectively. The stress matrix $[\sigma]$ has normal stresses and shear stresses as components.

The strain of the stacked iron core 21 includes components that strain the stacked iron core 21 in normal directions (compressive or tensile) and components that strain the stacked iron core 21 in shear directions. Normal strains in the Z, X, and Y axis directions are represented by $\varepsilon z$, $\varepsilon x$, and $\varepsilon y$, respectively. Shear strains in the ZX, XY, and YZ planes are represented by $\gamma zx$, $\gamma xy$, and $\gamma yz$, respectively.

The elasticity matrix [C] has $6 \times 6 = 36$ elements that specify the relationship between the six components of stress and the six components of strain. The 36 elements are represented by elastic moduli Cij (i = 1-6, j = 1-6). The relationship between stress and strain is expressed by the elasticity matrix as in Equation (4) below.
[Math. 3]

$$
\begin{bmatrix} \sigma_x \\ \sigma_y \\ \sigma_z \\ \tau_{yz} \\ \tau_{zx} \\ \tau_{xy} \end{bmatrix}
=
\begin{bmatrix}
C_{11} & C_{12} & C_{13} & C_{14} & C_{15} & C_{16} \\
C_{12} & C_{22} & C_{23} & C_{24} & C_{25} & C_{26} \\
C_{13} & C_{23} & C_{33} & C_{34} & C_{35} & C_{36} \\
C_{14} & C_{24} & C_{34} & C_{44} & C_{45} & C_{46} \\
C_{15} & C_{25} & C_{35} & C_{45} & C_{55} & C_{56} \\
C_{16} & C_{26} & C_{36} & C_{46} & C_{56} & C_{66}
\end{bmatrix}
\begin{bmatrix} \varepsilon_x \\ \varepsilon_y \\ \varepsilon_z \\ \gamma_{yz} \\ \gamma_{zx} \\ \gamma_{xy} \end{bmatrix}
\qquad \ldots (4)
$$

The stacked iron core 21 is composed of the stacked grain-oriented electrical steel sheets 22, and therefore the stacked iron core 21 has mechanical symmetry and also has 180-degree symmetry in the longitudinal direction of the stacked grain-oriented electrical steel sheets 22 and a direction orthogonal thereto. Therefore, the stacked iron core 21 may be said to be orthotropic as an anisotropy classification. The elasticity matrix of an orthotropic object is basically represented by a total of nine elastic moduli, C11, C12, C13, C22, C23, C33, C44, C55 and C66, as in Equation (5) below.
[Math. 4]

$$\begin{bmatrix} \sigma_x \\ \sigma_y \\ \sigma_z \\ \tau_{yz} \\ \tau_{zx} \\ \tau_{xy} \end{bmatrix} = \begin{bmatrix} C_{11} & C_{12} & C_{13} & 0 & 0 & 0 \\ C_{12} & C_{22} & C_{23} & 0 & 0 & 0 \\ C_{13} & C_{23} & C_{33} & 0 & 0 & 0 \\ 0 & 0 & 0 & C_{44} & 0 & 0 \\ 0 & 0 & 0 & 0 & C_{55} & 0 \\ 0 & 0 & 0 & 0 & 0 & C_{66} \end{bmatrix} \begin{bmatrix} \varepsilon_x \\ \varepsilon_y \\ \varepsilon_z \\ \gamma_{yz} \\ \gamma_{zx} \\ \gamma_{xy} \end{bmatrix} \qquad \dots (5)$$

Of these nine elastic moduli, the elastic moduli C11, C12, C13, C22, C23, and C33 are calculated by each of the following Equations (6) through (12), based on the longitudinal elastic moduli Ex, Ey, and Ez and the Poisson's ratios vxy, vyx, vyz, vzy, vzx, and vxz.

[Math. 5]

$$C_{11} = \frac{1 - \nu_{yz}\nu_{zy}}{E_y E_z \Delta} \quad \cdots (6) \qquad C_{12} = \frac{\nu_{yx} + \nu_{zx}\nu_{yz}}{E_y E_z \Delta} \quad \cdots (7)$$

$$C_{13} = \frac{\nu_{zx} + \nu_{yx}\nu_{zy}}{E_y E_z \Delta} \quad \cdots (8) \qquad C_{22} = \frac{1 - \nu_{xz}\nu_{zx}}{E_z E_x \Delta} \quad \cdots (9)$$

$$C_{23} = \frac{\nu_{zy} + \nu_{xy}\nu_{zx}}{E_x E_y \Delta} \quad \cdots (10) \qquad C_{33} = \frac{1 - \nu_{xy}\nu_{yx}}{E_x E_y \Delta} \quad \cdots (11)$$

$$\Delta = \frac{1 - \nu_{xy}\nu_{yx} - \nu_{xz}\nu_{zx} - \nu_{xy}\nu_{yz} - 2\nu_{yx}\nu_{zy}\nu_{zx}}{E_x E_y E_z} \quad \cdots (12)$$

The elastic modulus C44 corresponds to the transverse elastic modulus Gyz in the YZ plane, as indicated below as Equations (13), (14), and (15). The elastic modulus C55 corresponds to the transverse elastic modulus Gzx in the ZX plane. The elastic modulus C66 corresponds to the transverse elastic modulus Gxy in the XY plane.

[Math. 6]

$$C_{44} = G_{yz} \quad \cdots (13)$$

$$C_{55} = G_{zx} \quad \cdots (14)$$

$$C_{66} = G_{xy} \quad \cdots (15)$$

Here, Ex, Ey, and Ez are the longitudinal elastic modulus in the X direction (Young's modulus), Y direction (Young's modulus) and Z direction (Young's modulus), respectively. vxy, vyx, vyz, vzy, vzx, and vxz represent Poisson's ratio in the XY plane (ratio of longitudinal strain in the X direction to transverse strain in the Y direction), Poisson's ratio in the YX plane, Poisson's ratio in the YZ plane, Poisson's ratio in the ZY plane, Poisson's ratio in the ZX plane, and Poisson's ratio in the XZ plane, respectively. The relationship between longitudinal elastic modulus and Poisson's ratio is expressed by the following Equation (16), which is called the reciprocal theorem.
[Math. 7]

$$\frac{\nu_{xy}}{E_X} = \frac{\nu_{yx}}{E_y} \ , \qquad \frac{\nu_{yz}}{E_y} = \frac{\nu_{zy}}{E_Z} \ , \qquad \frac{\nu_{zx}}{E_Z} = \frac{\nu_{xz}}{E_X} \qquad \cdot\cdot\cdot (16)$$

According to the reciprocal theorem, Poisson's ratio vyx in the YX plane is represented using Ex, Ey, and vxy. Poisson's ratio vzy in the ZY plane is represented using Ez, Ey, and vyz. Poisson's ratio vxz in the XZ plane is represented using Ez, Ex, and vzx.

Accordingly, a total of nine elastic moduli C11, C12, C13, C22, C23, C33, C44, C55, and C66, representing the elasticity matrix of an orthotropic object, are represented by the longitudinal elastic moduli Ex, Ey, and Ez, the transverse elastic moduli Gyz, Gzx, and Gxy, and the Poisson's ratios vxy, vyz, and vzx, expressed using a total of nine mechanical properties. Therefore, determining the nine mechanical properties is equivalent to determining the nine elastic moduli that represent the elasticity matrix. Methods for determining the longitudinal elastic moduli, the transverse elastic moduli, and the Poisson's ratios are explained below.

First, for the longitudinal elastic modulus of an orthotropic stacked iron core, the longitudinal moduli Ex and Ey may be set equal to the longitudinal moduli Ex0 and Ey0 of a single steel sheet. However, the longitudinal elastic modulus Ez cannot be set equal to the longitudinal elastic modulus Ez0 of a single steel sheet, because a slight gap exists between the stacked steel sheets. Therefore, according to the present embodiment, experiments are conducted to determine the relationship between load and displacement in the stacking direction of stacked steel sheets, and the longitudinal elastic modulus Ez is set based on the experimental results. According to the present embodiment, Ez = 10 GPa is set based on the experimental results. The effect of a large or small value of the longitudinal elastic modulus in the stacking direction on the vibration calculation results is small. Therefore, even when Ez is set equal to the longitudinal elastic modulus Ez0 of one steel sheet, an error in the vibration calculation results is not large.

Further, for the Poisson's ratio of an orthotropic stacked iron core, Poisson's ratio vxy in the XY plane may be set equal to Poisson's ratio vxy0 of a single steel sheet. However, Poisson's ratio vyz in the YZ plane and Poisson's ratio vzx in the ZX plane cannot be set as the Poisson's ratios vyz0 and vzx0 of a single steel sheet. This is because the mechanical coupling between the strain in the stacking direction and the strain normal to the stacking direction in a stacked iron core is considered to be extremely weak. Here, actually measuring vyz and vzx is extremely difficult. However, based on the above, vyz and vzx are expected to be extremely small. Therefore, according to the present embodiment, both vyz and vzx are assumed to be zero.

Further, for the transverse elastic moduli of the stacked iron core, the transverse elastic modulus Gxy in the XY plane may be set equal to the transverse elastic modulus GxyO of a single steel sheet. However, the transverse elastic moduli in two planes including the stacking direction, that is, Gzx in the ZX plane and Gyz in the YZ plane, cannot be set as the transverse elastic moduli GzxO and GyzO of a single steel sheet. This is because the transverse elastic moduli Gzx and Gyz need to reflect the effect of slippage between steel sheets that occurs in the X and Y directions perpendicular to the stacking direction at interfaces between stacked steel sheets. Therefore, in order to improve the analysis accuracy of the vibration analysis using the constitutive equation that expresses the relationship between stress and strain in a stacked iron core in matrix representation, highly accurate determination of the transverse elastic moduli in two planes that include the stacking direction of the stacked iron core of the transformer in the elasticity matrix in the constitutive equation, namely the transverse elastic modulus Gzx in the ZX plane and the transverse elastic modulus Gyz in the YZ plane, is required as an important matter.

Here, as a method for determining the transverse elastic modulus Gzx in the ZX plane and the transverse elastic modulus Gyz in the YZ plane as values reflecting the effect of slippage between steel sheets, actually fabricating a stacked iron core for a three-phase three-leg transformer and measuring accurate transverse elastic moduli Gzx and Gyz may be considered. However, no method has been established to measure the transverse elastic modulus of a stacked iron core. This is because, while ultrasonic waves may be used to measure mechanical constants including transverse elastic modulus in the case of metal materials, accurate measurements in the case of a stacked iron core are likely to be difficult because slippage between steel sheets greatly attenuates vibrations.

As another possible method for determining the transverse elastic moduli in two planes of a stacked iron core including the stacking direction, measuring the natural frequency of the stacked iron core and estimating the transverse elastic moduli from the natural frequency may be considered. However, measuring the natural frequency of the stacked iron core of the transformer may still be difficult due to high vibration attenuation. Especially when an iron core is large, measuring the natural frequency is particularly difficult.

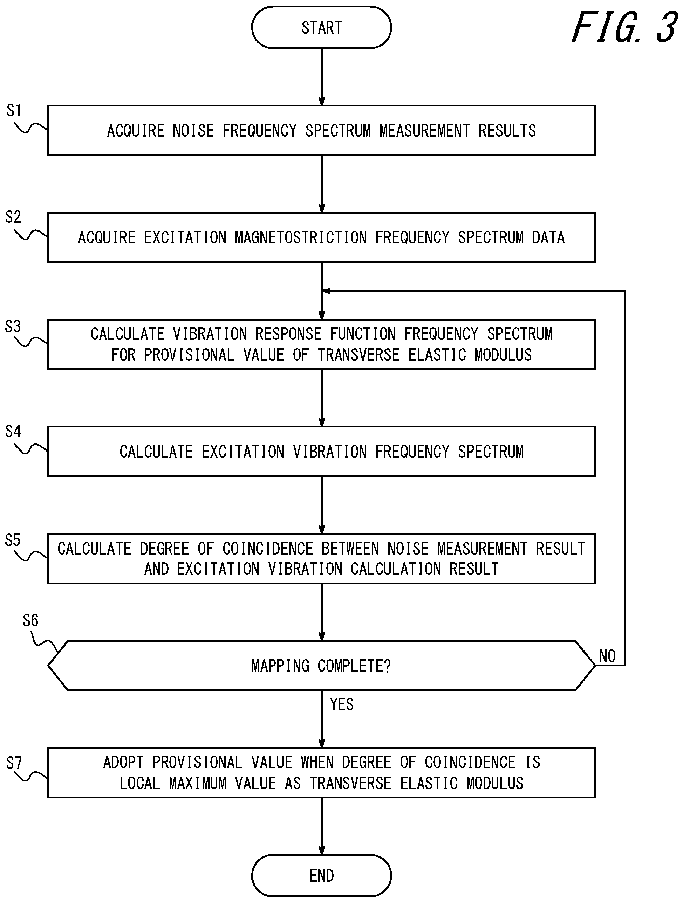

Therefore, in the elasticity matrix determination method according to the present embodiment, the transverse elastic moduli Gzx and Gyz in two planes including the stacking direction are determined by executing the procedures illustrated in FIG. 3. According to the present embodiment, the stacked iron core 21 for a three-phase three-leg transformer, illustrated as an example in FIG. 1, is the subject of the analysis. According to the present embodiment, the transverse elastic modulus of the upper yoke 22a and the transverse elastic modulus of the lower yoke 22b that constitute the stacked iron core 21 are the same value. The transverse elastic moduli of the upper yoke 22a and the lower yoke 22b that constitute the stacked iron core 21 are different from that of the legs 22c. In other words, the transverse elastic moduli $Gyz$ and $Gzx$ in two planes including the stacking direction of the stacked iron core 21 of the transformer included in the elasticity matrix in the constitutive equation are different for the upper yoke 22a and the lower yoke 22b that constitute the stacked iron core 21 and the legs 22c. Therefore, in the elasticity matrix determination method according to the present embodiment, the transverse elastic moduli $Gyz$ and $Gzx$ in two planes including a plurality of different stacking directions are determined. By executing the elasticity matrix determination method according to the present embodiment, the transverse elastic moduli $Gyz$ and $Gzx$ of the upper yoke 22a and the lower yoke 22b, and the transverse elastic moduli $Gyz$ and $Gzx$ of the legs 22c are respectively determined.

The upper yoke 22a and the lower yoke 22b are also collectively referred to as a first portion. The legs 22c are also referred to as a second portion. In other words, the stacked iron core 21 includes the first portion and the second portion. The transverse elastic moduli $Gyz$ and $Gzx$ of the first portion and the transverse elastic moduli $Gyz$ and $Gzx$ of the second portion are different from each other. By executing the elasticity matrix determination method according to the present embodiment, the transverse elastic moduli $Gyz$ and $Gzx$ of the first portion and the transverse elastic moduli $Gyz$ and $Gzx$ of the second portion that are different from each other are determined.

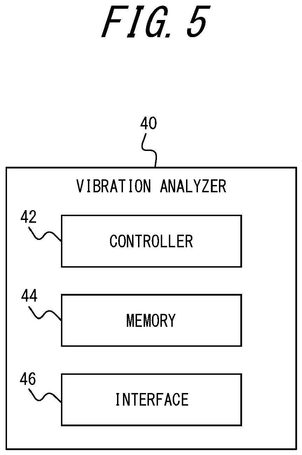

Each procedure of the elasticity matrix determination method according to the present embodiment may be executed by a vibration analyzer 40 illustrated in FIG. 5. The vibration analyzer 40 includes a controller 42, a memory 44, and an interface 46.

The controller 42 controls and manages each functional part constituting the vibration analyzer 40 and the vibration analyzer 40 as a whole. The controller 42 may include at least one processor, such as a central processing unit (CPU), to control and manage various functions. The controller 42 may include a single processor or a plurality of processors. The controller 42 including at least one processor may realize the functions of the vibration analyzer 40 by reading and executing a program stored in the memory 44.

The memory 44 may function as a memory for storing various types of information. The memory 44 may store, for example, a program to be executed in the controller 42, data used in processing executed in the controller 42, a result of processing, or the like. Further, the memory 44 may function as the working memory of the controller 42. The memory 44 may be configured as semiconductor memory, for example, but is not limited to this, and may include any storage device. For example, the memory 44 may be configured as the internal memory of a processor used as the controller 42 or as a hard disk drive (HDD) accessible from the controller 42.

The interface 46 may include a communication interface for communicating with other devices by wired or wireless means. The interface 46 may include input/output ports that input and output data to and from other devices. The interface 46 sends and receives required data and signals to and from a process computer or higher-level system. The interface 46 may communicate based on wired communication standards and may communicate based on wireless communication standards. Example wireless communication standards may include cellular phone communication standards such as 3G, 4G, 5G, and the like. Further, example wireless communication standards may include IEEE 802.11 and Bluetooth®. The interface 46 may support one or more of these communication standards. The interface 46 is not limited to these examples and may communicate with other devices and input/output data based on various standards.

The following describes each procedure of the elasticity matrix determination method according to the present embodiment as being executed by the controller 42 of the vibration analyzer 40. Each procedure of the elasticity matrix determination method may be executed by another device and may be executed by a human.

First, in step S1 (first step) of FIG. 3, the controller 42 acquires results of measurement of a frequency spectrum of noise determined by measuring excitation noise of the stacked iron core 21 of the transformer subject to vibration analysis illustrated in FIG. 1. Specifically, the excitation noise is measured by setting excitation frequency to 50 Hz for the stacked iron core 21. The frequency spectrum of transformer excitation noise consists of frequency components that are integer multiples of twice the excitation frequency (even multiples of the excitation frequency), and therefore the spectrum of the excitation noise at each frequency of 100 Hz pitch in a range from 100 Hz to 1000 Hz is acquired as the frequency spectrum of the noise. In the field of transformer manufacturing, the excitation noise properties of transformers are widely measured as a quality control item of shipped products. Accordingly, there is no particular difficulty in such measurement. The excitation frequency may be set to 60 Hz. When the excitation frequency is set to 60 Hz, a spectrum of the excitation noise at a pitch of 120 Hz is acquired from a frequency of 120 Hz to 1200 Hz.

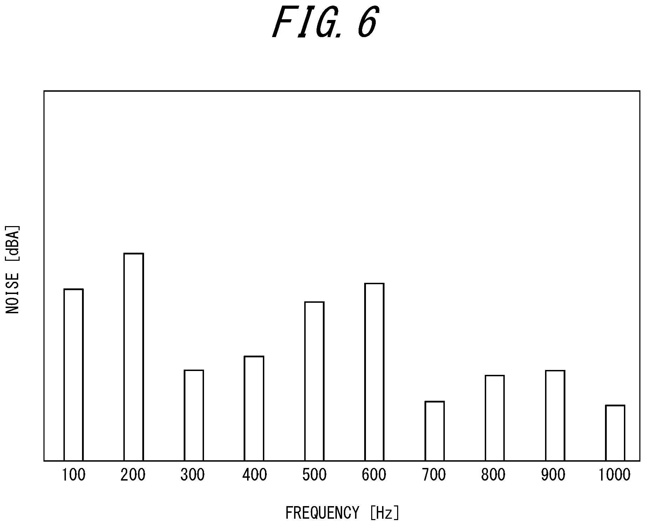

The following describes a case where the excitation frequency is set to 50 Hz. An example of the frequency spectrum of noise acquired when the excitation frequency is set to 50 Hz is illustrated as a graph in FIG. 6. In the graph in FIG. 6, the horizontal axis represents frequency. The vertical axis represents magnitude of excitation noise.

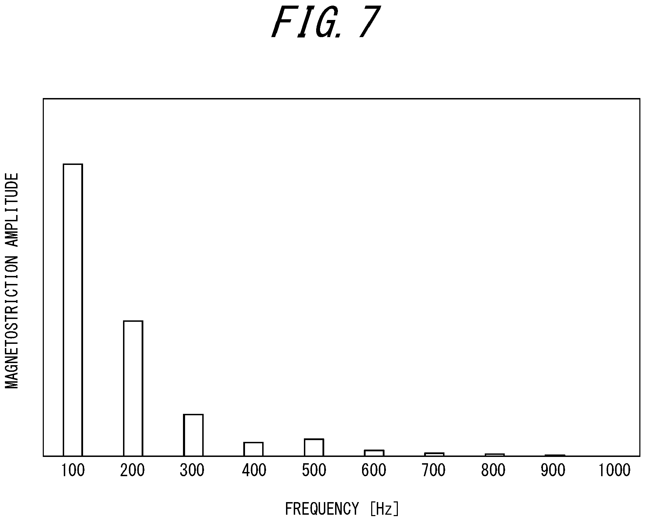

Next, in step S2 (second step) of FIG. 3, the controller 42 acquires frequency spectrum data of excitation magnetostriction of an electrical steel sheet that is the same as the grain-oriented electrical steel sheets 22 that constitute the stacked iron core 21 of the transformer subject to vibration analysis illustrated in FIG. 1. As the frequency spectrum data of the excitation magnetostriction, excitation magnetostriction amplitude spectrum data at each frequency a pitch of 100 Hz in the range from 100 Hz to 1000 Hz is acquired. The frequency spectrum data of the excitation magnetostriction may be acquired by measuring the excitation magnetostriction of the electrical steel sheet or by acquiring data from the manufacturer of the electrical steel sheet. An example of the frequency spectrum data of the excitation magnetostriction acquired is illustrated as a graph in FIG. 7. In the graph in FIG. 7, the horizontal axis represents frequency. The vertical axis represents magnitude of magnetostriction amplitude. The magnitude of magnetostriction amplitude at each frequency is expressed in dB as a value normalized by dividing by the value of the magnetostriction amplitude when the frequency is 100 Hz. The dB indication corresponds to a value obtained by taking the common logarithm of the value to be displayed and multiplying by 10.

Next, in step S3 (third step), the controller 42 provisionally sets the transverse elastic moduli Gyz and Gzx and calculates a frequency spectrum of vibration response function for the provisionally set transverse elastic moduli. Specifically, the controller 42 executes a vibration response analysis on the stacked iron core 21 of the transformer subject to vibration analysis using structural analysis software. Of the nine mechanical property values of the stacked iron core 21, which are the longitudinal elastic moduli Ex, Ey, and Ez, the transverse elastic moduli Gyz, Gzx, and Gxy, and the Poisson's ratios vxy, vyz, and vzx, seven are set as follows, except the transverse elastic moduli Gyz and Gzx, as described above.

Ex = ExO, Ey = EyO, Ez = 10 GPa
Gxy = Gxy0
vxy = vxy0, vyz = vzx = 0

The transverse elastic moduli Gyz and Gzx in the two planes including the stacking direction are different for each of the plurality of portions (two) of the stacked iron core 21. Specifically, the transverse elastic moduli Gyz and Gzx of the upper yoke 22a and the lower yoke 22b are different from those of the legs 22c. Gyz = Gzx = G1 is provisionally set for the transverse elastic modulus of the upper yoke 22a and the lower yoke 22b. Gyz = Gzx = G2 is provisionally set for the transverse elastic modulus of the legs 22c. Each of G1 and G2 is a value provisionally selected and set from a defined range as the transverse elastic modulus, and may also be referred to as a provisional value of the transverse elastic modulus. G1 corresponds to the transverse elastic moduli Gyz and Gzx in the first portion, and is also referred to as a first provisional value. G2 corresponds to the transverse elastic moduli Gyz and Gzx in the second portion, and is also referred to as a second provisional value. The controller 42 changes the combination of provisional values (G1, G2) and calculates the frequency spectrum of the vibration response function of the stacked iron core 21 of the transformer for each combination.

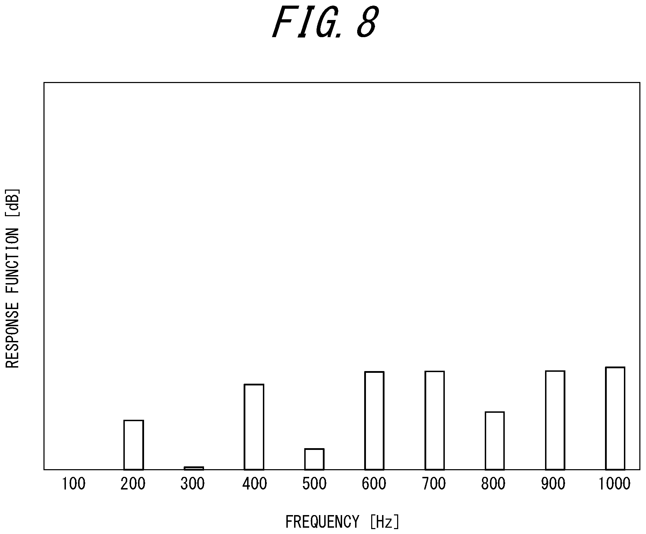

An example of the frequency spectrum of the vibration response function of the stacked iron core 21 of the transformer calculated for a particular combination of values (G1, G2) is illustrated as a graph in FIG. 8. In the graph in FIG. 8, the horizontal axis represents frequency. The vertical axis represents magnitude of response function. The magnitude of the response function is normalized and displayed so that the vibration response value is 0 dB when the frequency is 100 Hz. Here, each of the provisional values (G1, G2) is actually selected from a range of transverse elastic modulus expected from the structure of the stacked iron core 21 of the transformer. According to the present embodiment, each of G1 and G2 is selected from a range of 0.05 GPa to 0.5 GPa.

Next, in step S4 (fourth step), the controller 42 calculates a frequency spectrum of the excitation vibration of the stacked iron core 21 of the transformer, based on the frequency spectrum data of the excitation magnetostriction of the electrical steel sheets acquired in step S2 (second step) and the frequency spectrum of the vibration response function of the stacked iron core 21 of the transformer calculated in step S3 (third step). Specifically, the controller 42 calculates the frequency spectrum of the excitation vibration of the stacked iron core 21 of the transformer as the product of the frequency spectrum data of the excitation magnetostriction of the electrical steel sheets and the frequency spectrum of the vibration response function of the stacked iron core 21 of the transformer. When the frequency spectrum is displayed in dB, the controller 42 calculates the frequency spectrum of the excitation vibration of the stacked iron core 21 of the transformer as a sum.

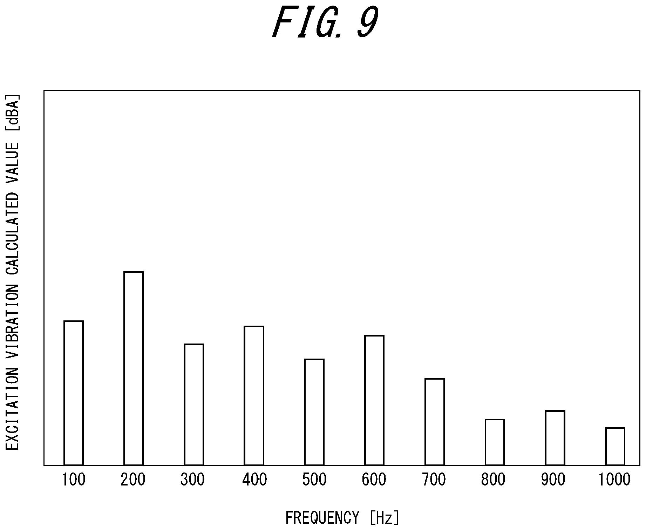

An example of the frequency spectrum of the excitation vibration of the stacked iron core 21 of the transformer calculated in this way is illustrated as a graph in FIG. 9. In the graph in FIG. 9, the horizontal axis represents frequency. The vertical axis represents calculated magnitude of excitation vibration. The magnitude of the excitation vibration is indicated in dB.

Next, in step S5 (fifth step), the controller 42 calculates the degree of coincidence between measured results of the frequency spectrum of the noise of the stacked iron core 21 of the transformer acquired in step S1 (first step) and the frequency spectrum of the excitation vibration of the stacked iron core 21 of the transformer calculated in step S4 (fourth step).

The frequency spectrum data of the noise is measured for each frequency from 100 Hz to 1000 Hz with a 100 Hz pitch. Therefore, the number of frequency spectrum data points for the noise is 10. Each frequency component of the noise frequency spectrum data is denoted as (S100, S200, 5300, ..., S1000). Further, the frequency spectrum data of the excitation vibration is calculated for each frequency from 100 Hz to 1000 Hz with a 100 Hz pitch. Therefore, the number of frequency spectrum data points for the excitation vibration is 10. Each frequency component of the frequency spectrum data of excitation vibration is denoted as (V100, V200, V300, ..., V1000). The following is an explanation of how the degree of coincidence is calculated based on these notations.

(S100, S200, 5300, ..., S1000) representing each frequency component of the frequency spectrum data of the noise and (V100, V200, V300, ..., V1000) representing each frequency component of the frequency spectrum data of the excitation vibration are respectively considered as data points in multidimensional space. In this case, these data points are considered as data points in 10-dimensional space.

Here, the controller 42 may typically calculate the degree of coincidence between the frequency spectrum data of the noise and the frequency spectral data of the excitation vibration as the Euclidean distance of the data points in multidimensional space. However, when the degree of coincidence is calculated as a Euclidean distance, the accuracy of calculation of the degree of coincidence is known to decrease due to offsets in the data. When the frequency spectrum data of the excitation noise and the excitation vibration are expressed in dB values, there is a concern that the degree of freedom in determining the reference value may cause an offset in the data, which may deteriorate the accuracy of the calculation of the degree of coincidence.

Therefore, to avoid the concern that the calculation accuracy may deteriorate due to data offset, the controller 42 calculates cosine similarity as the degree of coincidence according to the present embodiment. The cosine similarity is calculated as the cosine value of the angle between two vectors when (S100, S200, 5300, ..., S1000) and (V100, V200, V300, ..., V1000) are considered as multidimensional vectors S and V (here, 10-dimensional space vectors), respectively. The multidimensional vector S is also referred to as a first vector. The multidimensional vector V is also referred to as a second vector. The cosine similarity is calculated by the following Equation (17). In Equation (17), cosθ represents the cosine similarity. The symbols of "→" above "S" and "V" represent multidimensional vectors S and V.

[Math. 8]

$$\cos\theta = \frac{\vec{S} \cdot \vec{V}}{\|\vec{S}\| \, \|\vec{V}\|} \qquad \cdots \; (17)$$

The cosine similarity is calculated as a value obtained by dividing the inner product of the multidimensional vectors S and V by the product of the length of the multidimensional vector S and the length of the multidimensional vector V. When the multidimensional vector S and the multidimensional vector V coincide, the cosine similarity is calculated as 1. When the multidimensional vector S and the multidimensional vector V are orthogonal, the cosine similarity is calculated as 0. When the multidimensional vector S and the multidimensional vector V are in opposite directions, the cosine similarity is calculated as -1.

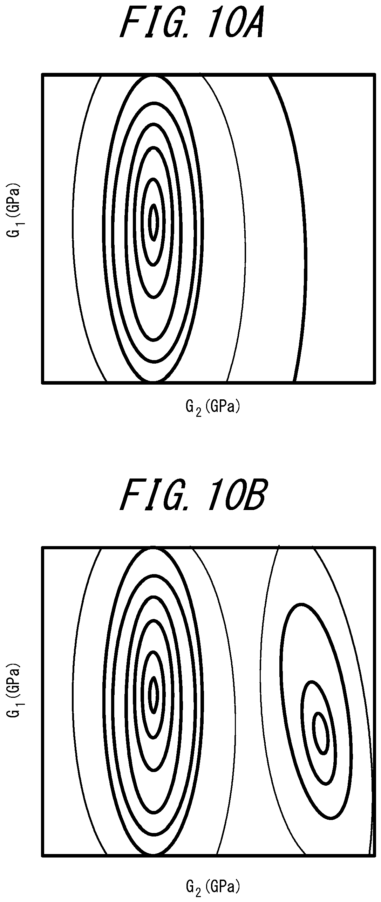

Next, in step S6 (sixth step), the controller 42 determines whether the mapping of the degree of coincidence in a defined range by changing the provisional values in steps S3 through S5 has been completed. Specifically, the controller 42 repeatedly executes the procedures from step S3 to step S5 while changing the combination of provisional values (G1, G2) and calculates the degree of coincidence for each combination of provisional values (G1, G2). The controller 42 maps the calculated degree of coincidence for each combination of provisional values onto a two-dimensional map. Specifically, examples of the results of the calculation of the degree of coincidence between the frequency spectrum of the excitation vibration and the frequency spectrum of the excitation noise of the stacked iron core 21 of the transformer are illustrated in FIG. 10A and FIG. 10B as two-dimensional maps. In the two-dimensional maps in FIG. 10A and FIG. 10B, the vertical and horizontal axes represent G1 and G2, respectively. In FIG. 10A and FIG. 10B, isovalue lines representing equal degrees of coincidence are noted. In FIG. 10A and FIG. 10B, closed isovalue lines that are closed curves having smaller diameters correspond to isovalue lines having higher degrees of coincidence. The combination of G1 and G2 for which the degree of coincidence is a local maximum value corresponds to the vicinity of the center of a closed curve. In FIG. 10A, one combination of G1 and G2 exists for which the degree of coincidence is a local maximum value. In FIG. 10B, two combinations of G1 and G2 exist for which the degree of coincidence is a local maximum value. The controller 42 may map the degree of coincidence for each combination of provisional values to a two-dimensional map and determine that mapping has been completed when a defined range is filled. Further, the controller 42 may determine that mapping has been completed when the presence of a local maximum value is detectable in the two-dimensional map mapping the degree of coincidence.

When the controller 42 does not determine that mapping has been completed (step S6: NO), processing returns to the procedure in step S3 and repeats steps S3 through S6 until the controller 42 is able to determine that mapping has been completed. When the controller 42 determines that mapping has been completed (step S6: YES), processing proceeds to step S7.

In step S7 (seventh step), the controller 42 detects a point where the degree of coincidence is a local maximum value from the two-dimensional map. Then, the controller 42 adopts the combination of provisional values (G1, G2) when the degree of coincidence is a local maximum value as the transverse elastic moduli Gzx and Gyz in two planes including the stacking direction, for each of the plurality (two) of portions that constitute the stacked iron core 21. Specifically, the controller 42 adopts G1 as the transverse elastic moduli Gzx and Gyz of the upper yoke 22a and the lower yoke 22b. In other words, the controller 42 sets Gzx = Gyz = G1 for the upper yoke 22a and the lower yoke 22b. Further, the controller 42 adopts G2 as the transverse elastic moduli Gzx and Gyz of the legs 22c. In other words, the controller 42 sets Gzx = Gyz = G2 for the legs 22c. After execution of the procedure of step S7, the controller 42 ends execution of the procedures of the flowchart in FIG. 3.

According to the present embodiment, while repeatedly executing the procedures from step S3 to S6, the controller 42 changes the two parameters G1 and G2 to complete mapping of the degree of coincidence and detect a local maximum value of the degree of coincidence. In other words, the controller 42 needs to execute a numerical search in two dimensions. The two-dimensional search results in a very large number of search points. Further, two-dimensional searches require a large computational load. Therefore, according to the present embodiment, an optimization search method using a genetic algorithm (GA) is used, utilizing artificial intelligence (AI) technology. Specifically, as an evaluation function in the optimization search method, the degree of coincidence between the frequency spectrum of the noise of the stacked iron core 21 of the transformer acquired in step S1 and the frequency spectrum of the excitation vibration of the stacked iron core 21 of the transformer calculated in step S4 is employed. Commercially available search software may be used as a GA optimization search tool. Further, a self-created GA optimization search tool may be used, as the inventors have done.

According to the present embodiment, a case is illustrated in which the transverse elastic moduli are calculated by assuming that the transverse elastic moduli of the stacked iron core, Gyz and Gzx, are equal. The values of Gyz and Gzx may be different from each other. However, the inventors confirmed that the value of Gyz and the value of Gzx may be considered equal in a stacked iron core of grain-oriented electrical steel sheets, not only for the stacked iron core illustrated in FIG. 1, but also for stacked iron cores having various dimensions. Therefore, the values of the transverse elastic moduli Gyz and Gzx are considered equal to each other according to the present embodiment.

In the calculated results of the degree of coincidence illustrated in the two-dimensional map in FIG. 10A, the local maximum value of the degree of coincidence exists at one location indicated by the isovalue lines. When there is only one point at which the degree of coincidence has a local maximum value, the controller 42 adopts the provisional values (G1, G2) for the case where the degree of coincidence is the local maximum value as the transverse elastic moduli Gzx and Gyz in two planes including the stacking direction, for each of the plurality (two) of portions that constitute the stacked iron core 21. According to investigation by the inventors, it was confirmed that vibration analysis accuracy was improved by incorporating the transverse elastic modulus calculated in this way into the constitutive equation.

On the other hand, as illustrated in the two-dimensional map in FIG. 10B, there may be two local maximum values of degree of coincidence, indicated by isovalue lines, at two locations. The controller 42 is unable to determine which of the provisional values for which local maximum value of the degree of coincidence may be adopted as the transverse elastic modulus. As a result of investigation by the inventors into a cause of appearance of a plurality of local maximum values, it was found that a plurality of local maximum values tends to appear when the frequency spectrum data of the excitation noise of the stacked iron core of the transformer calculated in step S1 contains a lot of disturbance noise. When the degree of coincidence has a plurality of local maximum values, the controller 42 is unable to determine the transverse elastic moduli.

Further, a case in which the degree of coincidence does not have a single local maximum value is possible. In such a case, the controller 42 is also unable to determine the transverse elastic moduli.

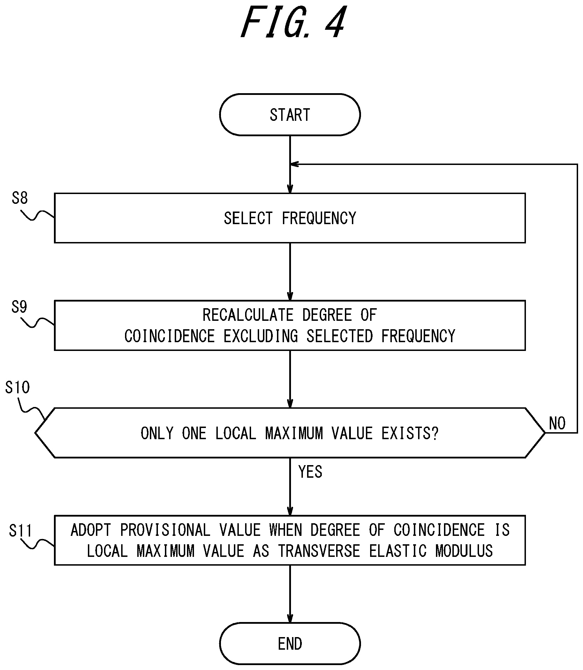

When there is not only one local maximum value, the controller 42 may further execute the procedures of the flowchart illustrated in FIG. 4. First, in step S8 (eighth step), the controller 42 selects one frequency from among ten frequencies having a pitch of 100 Hz from 100 Hz to 1000 Hz. Next, in step S9 (ninth step), the controller 42 recalculates the degree of coincidence by excluding the frequency selected in step S8 and executing the degree of coincidence calculation in step S5 of FIG. 3.

Further, in step S10, the controller 42 detects the local maximum value of the degree of coincidence recalculated in step S9 and determines whether only one local maximum value exists. Specifically, the controller 42 re-creates the two-dimensional map of the degree of coincidence recalculated in step S9 and detects local maximum values in the two-dimensional map. When there is not only one local maximum value of the degree of coincidence (step S10: NO), the controller 42 returns to the procedure of step S8, selects another frequency as the frequency to be excluded in step S9, and repeats the procedures from step S8 to S10 until only one local maximum value of the degree of coincidence exists. When only one local maximum value of the degree of coincidence exists (step S10: YES), the controller 42 proceeds to step S11. In step S11 (eleventh step), the controller 42, as in the procedure in step S7 of FIG. 3, adopts the combination of the provisional values (G1, G2) when the degree of coincidence is the local maximum value as the transverse elastic moduli Gzx and Gyz in two planes including the stacking direction, for each of the plurality (two) of portions that constitute the stacked iron core 21. The procedures of steps S10 and S11 are also referred to as a tenth step. After execution of the procedure in step S11, the controller 42 ends execution of the procedures of the flowchart in FIG. 4.

When excluding any one frequency in steps S8 and S9 does not result in only one local maximum value, the controller 42 may recalculate the degree of coincidence by excluding two frequencies in steps S8 and S9. The controller 42 may increase the number of frequencies excluded in steps S8 and S9 to three or more. The controller 42 executes the above operations until the number of local maximum values of the degree of coincidence is only one. By adopting the provisional values (G1, G2) for the case where the degree of coincidence is the local maximum value as the transverse elastic moduli Gyz and Gzx in the two planes including the stacking direction of the transformer and incorporating into the constitutive equation, vibration analysis accuracy is improved.

As described above, according to the transformer stacked iron core elasticity matrix determination method according to the present embodiment, when executing the vibration analysis of the stacked iron core 21 of stacked steel sheets using a constitutive equation that expresses the relationship between stress and strain in a matrix representation, the transverse elastic moduli Gyz and Gzx of the stacked iron core 21 of the transformer for the plurality (two) of different stacking directions in the elasticity matrices in the constitutive equation may be optimally determined. As a result, a discrepancy between measured and calculated vibration properties may be reduced.

Further, the vibration analysis method for the stacked iron core of the transformer according to the present embodiment includes a step of executing vibration analysis of the stacked iron core of the transformer by incorporating the transverse elastic moduli determined by executing the elasticity matrix determination method. In this way, a discrepancy between measured and calculated vibration properties may be reduced.

(EXAMPLE)

Verification of the effect of implementing the transformer stacked iron core elasticity matrix determination method according to the present embodiment and the vibration analysis method is described below as an Example.

First, grain-oriented electrical steel sheets each having a thickness of 0.23 mm were prepared. Then, by stacking the prepared grain-oriented electrical steel sheets, the stacked iron core 21 of a three-phase three-leg transformer for vibration analysis was produced, as illustrated in FIG. 1. The steel sheet stacked thickness of the stacked iron core 21 was 100 mm. Further, dimensions of the upper yoke 22a and the lower yoke 22b were made to be 100 mm wide by 500 mm long. Further, dimensions of the three legs 22c were made to be 100 mm wide with an iron core window length of 300 mm. The legs 22c connected the upper yoke 22a and the lower yoke 22b with a spacing of 100 mm between the legs 22c. Excitation coils were then formed by winding IV wires around each of the three legs 22c of the stacked iron core 21.

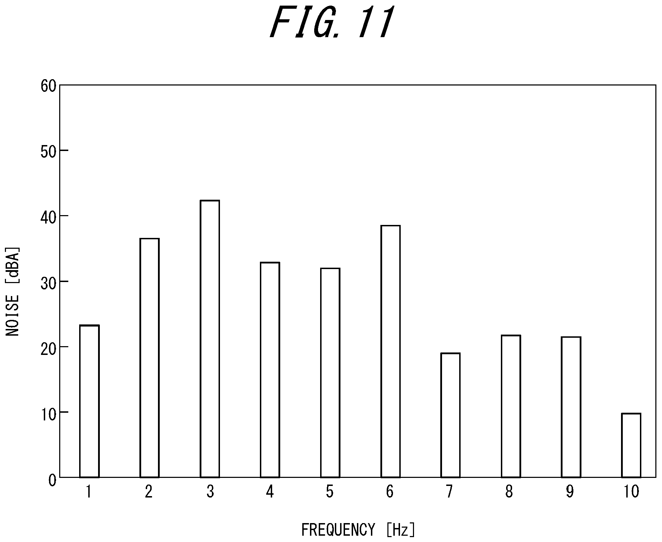

Supply voltage was adjusted so that iron core magnetic flux density was exactly 1.7 T by energizing coils with a 50 Hz three-phase current. In this state, the frequency spectrum of noise was acquired by measuring excitation noise using a sound level meter, as in the procedure of step S1 in FIG. 3. FIG. 11 illustrates an example of a result of noise frequency spectrum measurement. The vertical and horizontal axes of the graph in FIG. 11 are the same as in the graph in FIG. 6.

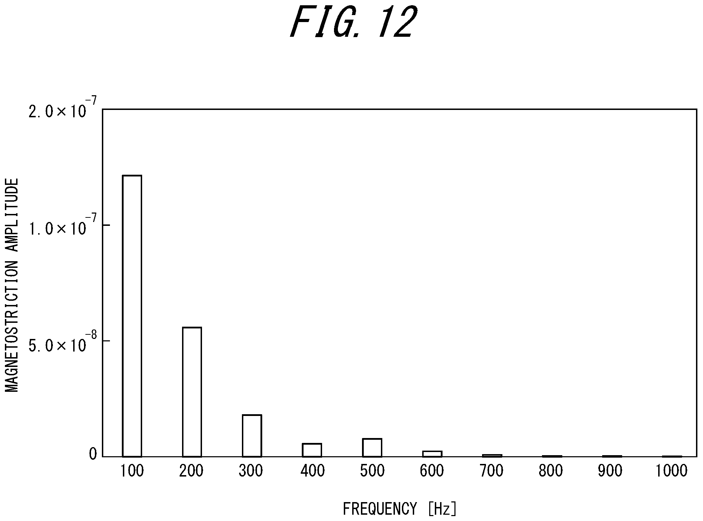

Next, the frequency spectrum of magnetostriction was acquired by measuring the excitation magnetostriction of the prepared grain-oriented electrical steel sheets when the excitation frequency was 50 Hz and the magnetic flux density was 1.7 T, using a magnetostriction measuring device. FIG. 12 illustrates an example of a result of frequency spectrum of magnetostriction measurement. The vertical and horizontal axes of the graph in FIG. 12 are the same as in the graph in FIG. 7.

Next, a vibration response analysis was performed on the stacked iron core 21 of the transformer subject to vibration analysis using structural analysis software. Here, seven of the nine mechanical properties of the stacked iron core 21, which are the longitudinal elastic moduli Ex, Ey, and Ez, the transverse elastic moduli Gyz, Gzx, and Gxy, and the Poisson's ratios vxy, vyz, and vzx, were set as follows.

Ex = 132 GPa, Ey = 220 GPa, Ez = 10 GPa
Gxy = 116 GPa
vxy = 0.37, vyz = vzx = 0

Here, x corresponds to the steel sheet rolling direction, y corresponds to a direction perpendicular to x. z corresponds to the steel sheet stacking direction.

Regarding the transverse elastic moduli Gyz and Gzx in the two planes including the stacking direction, the transverse elastic moduli Gyz and Gzx of the upper yoke 22a and the lower yoke 22b that constitute the stacked iron core 21, and the transverse elastic moduli Gyz and Gzx of the legs 22c are different from each other. Accordingly, the transverse elastic moduli of the upper yoke 22a and the lower yoke 22b that constitute the stacked iron core 21 were set as Gyz = Gzx = G1, and the transverse elastic moduli of the legs 22c were set as Gyz = Gzx = G2 (G1 and G2 are each provisional values selected from a defined range), and the frequency spectrum of the vibration response function of the stacked iron core 21 of the transformer was calculated for combinations of these provisional values (G1 and G2). The defined range in which each of the provisional values (G1, G2) is selected is actually the range of transverse elastic moduli expected from the structure of the stacked iron core 21 of the transformer, ranging from 0.05 GPa to 0.5 GPa according to the present embodiment.

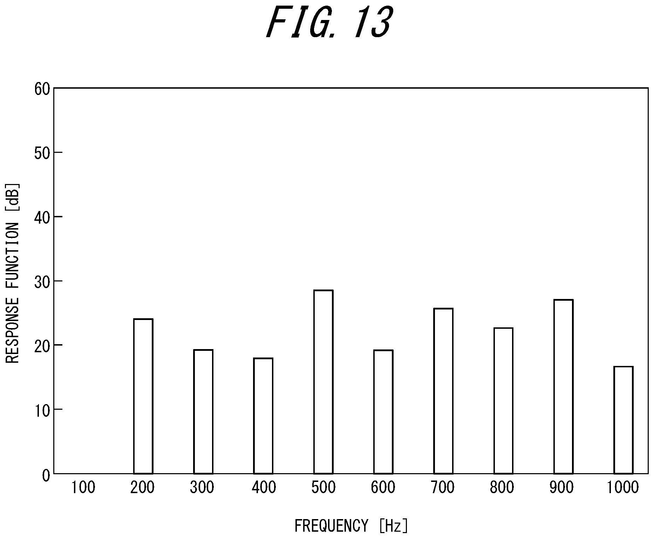

For example, when the transverse elastic moduli of the upper yoke 22a and the lower yoke 22b, which constitute the stacked iron core 21, were Gyz = Gzx = G1 = 0.2 GPa and that of the legs 22c were Gyz = Gzx = G2 = 0.1 GPa, the calculated results of the frequency spectrum of the vibration response function of the stacked iron core 21 are illustrated in FIG. 13. The vertical and horizontal axes of the graph in FIG. 13 are the same as in the graph in FIG. 8.

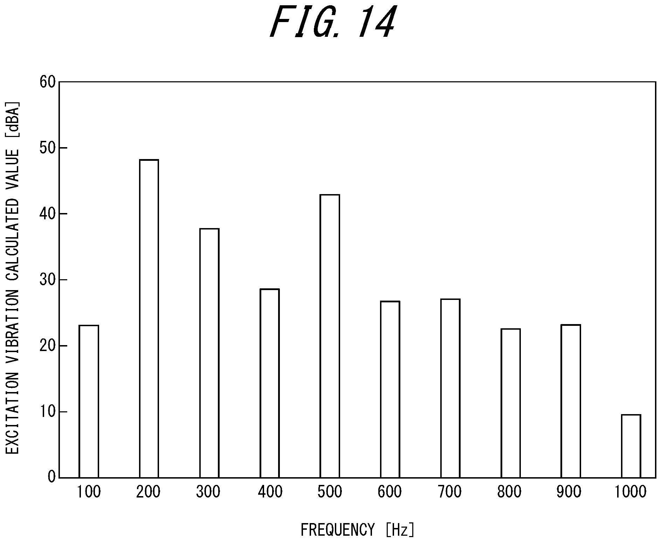

Next, as in the procedure in step S4 of FIG. 3, the frequency spectrum of the excitation vibration of the stacked iron core 21 of the transformer was calculated, based on the frequency spectrum data of the excitation magnetostriction of the electrical steel sheets acquired in step S2 of FIG. 3 and the frequency spectrum of the vibration response function of the stacked iron core 21 of the transformer calculated in step S3 of FIG. 3. For example, when the transverse elastic moduli of the upper yoke 22a and the lower yoke 22b, which constitute the stacked iron core 21, were Gyz = Gzx = G1 = 0.2 GPa and that of the legs 22c were Gyz = Gzx = G2 = 0.1 GPa, the calculated results of the frequency spectrum of the excitation vibration of the stacked iron core 21 are illustrated in FIG. 14. The vertical and horizontal axes of the graph in FIG. 14 are the same as in the graph in FIG. 9.

Next, as in the procedure in step S5 of FIG. 3, the degree of coincidence between the frequency spectrum of the noise of the stacked iron core 21 of the transformer acquired in step S1 of FIG. 3 and the frequency spectrum of the excitation vibration of the stacked iron core 21 of the transformer calculated in step S4 of FIG. 3 was calculated. Here, the cosine similarity was calculated as the degree of coincidence between the frequency spectrum of the noise of the stacked iron core 21 of the transformer and the frequency spectrum of the excitation vibration of the stacked iron core 21 of the transformer.

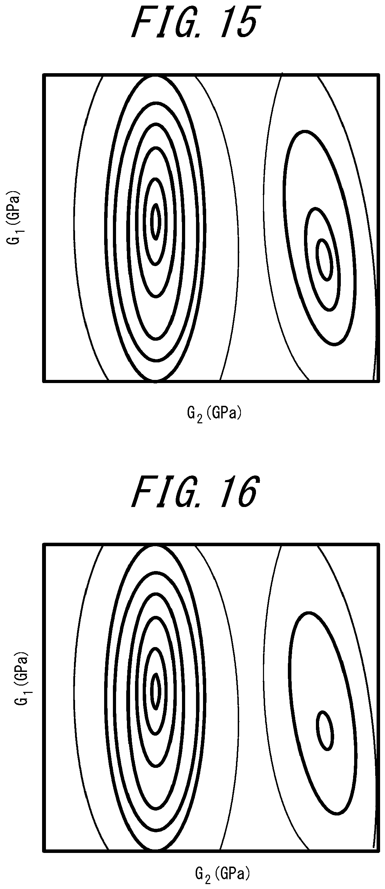

Next, as in the procedure of step S6 in FIG. 3, the values of the transverse elastic moduli Gyz = Gzx = G1 for the upper yoke 22a and the lower yoke 22b and the transverse elastic moduli Gyz = Gzx = G2 for the legs 22c were changed in the mentioned defined range, respectively, to change the combination of the provisional values (G1, G2). By repeating the procedure from step S3 through S5 in FIG. 3, a two-dimensional map indicating the degree of coincidence between the frequency spectrum of excitation vibration and the frequency spectrum of excitation noise was created. FIG. 15 illustrates an example of the two-dimensional map created according to the present Example. The vertical and horizontal axes of the graph in FIG. 15 are the same as in the graph in FIG. 10. In FIG. 15, two combinations of G1 and G2 exist for which the degree of coincidence is a local maximum value.

In step S6 of FIG. 3, there are two parameters (G1, G2), and therefore the numerical search needs to be executed in two dimensions. Therefore, the number of search points becomes very large and requires a great deal of work. Therefore, in the present Example, by utilizing artificial intelligence (AI) technology, an optimization search method using a genetic algorithm (GA) was adopted as a search method in which the degree of coincidence between the frequency spectrum of the noise of the stacked iron core 21 of the transformer acquired in step S1 of FIG. 3 and the frequency spectrum of the excitation vibration of the stacked iron core 21 of the transformer calculated in step S4 of FIG. 3 was used as an evaluation function.

When the transverse elasticity moduli of the upper yoke 22a and the lower yoke 22b constituting the stacked iron core 21 were Gyz = Gzx = G1 = 0.25 GPa and the transverse elasticity moduli of the legs 22c were Gyz = Gzx = G2 = 0.15 GPa, and when the transverse elasticity moduli of the upper yoke 22a and the lower yoke 22b constituting the stacked iron core 21 were Gyz= Gzx = G1 = 0.37 GPa and the transverse elastic moduli of the legs 22c were Gyz = Gzx = G2 = 0.18 GPa, the degree of coincidence between the frequency spectrum of the excitation vibration and the frequency spectrum of the excitation noise was calculated as almost the same value. In other words, no local maximum value was detected. As a result, determining iron core stiffness of the prototyped transformer was not possible for the present Example.

Therefore, as in the procedure in steps S8 and S9 of FIG. 4, a two-dimensional map indicating the degree of coincidence between the frequency spectrum of the excitation vibration and the frequency spectrum of the excitation noise was created by repeatedly calculating the degree of coincidence when excluding one out of ten frequencies having a pitch of 100 Hz in the range from 100 Hz to 1000 Hz. For example, a two-dimensional map of the calculated degree of coincidence excluding the frequency 500 Hz is illustrated in FIG. 16. The vertical and horizontal axes of the graph in FIG. 16 are the same as in the graph in FIG. 10. In FIG. 16, two combinations of G1 and G2 still exist for which the degree of coincidence is a local maximum value. In other words, according to the present Example, even when the degree of coincidence was calculated by excluding one frequency at a time, in the two-dimensional map indicating the degree of coincidence between the frequency spectrum of the excitation vibration and the frequency spectrum of the excitation noise, the number of points indicating a local maximum value did not become one.

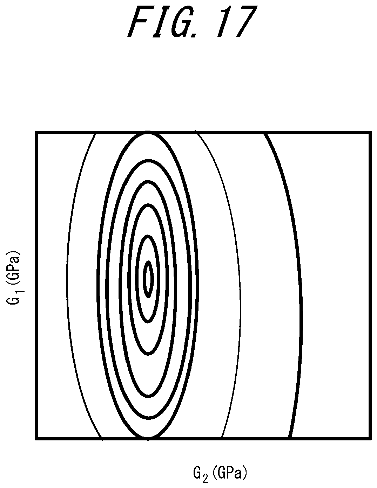

Next, the creation of a two-dimensional map indicating the degree of coincidence between the frequency spectrum of the excitation vibration and the frequency spectrum of the excitation noise was repeated by excluding two frequencies at a time and calculating the degree of coincidence. A two-dimensional map indicating the degree of coincidence between the frequency spectrum of the excitation vibration and the frequency spectrum of the excitation noise when 400 Hz and 700 Hz were chosen as the frequencies to be excluded is illustrated in FIG. 17. The vertical and horizontal axes of the graph in FIG. 17 are the same as in the graph in FIG. 10. In FIG. 17, one combination of G1 and G2 exists for which the degree of coincidence is a local maximum value. In other words, in this case, the number of local maximum values became one. In the case of the local maximum value of the degree of coincidence, the transverse elastic moduli $Gyz = Gzx = G1$ of the upper yoke 22a and the lower yoke 22b that constitute the stacked iron core 21 were 0.25 GPa. The transverse elastic moduli of the legs 22c $Gyz = Gzx = G2$ were 0.15 GPa.

As described above, the combination of the provisional values (G1, G2) in the case of the local maximum value of the degree of coincidence was determined. The determined provisional values (G1, G2) were set as the transverse elastic moduli Gzx and Gyz of the upper yoke 22a and the lower yoke 22b, and the transverse elastic moduli Gzx and Gyz of the legs 22c, respectively.

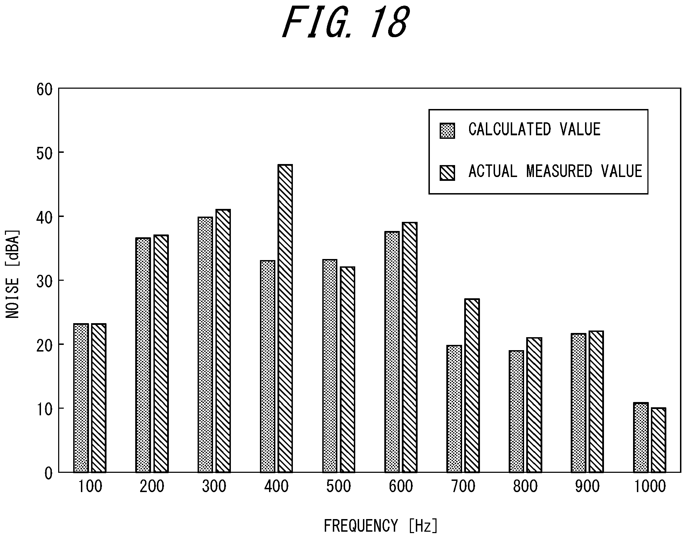

Finally, the transverse elastic moduli of the upper yoke 22a and the lower yoke 22b constituting the stacked iron core 21, $Gyz = Gzx = G1 = 0.25$ GPa and the transverse elastic moduli of the legs 22c, $Gyz = Gzx = G2 = 0.15$ GPa, were set as the final calculated values of the frequency spectrum of the excitation vibration of the stacked iron core of the transformer, and the frequency spectrum of the excitation vibration of the 21 iron core was calculated. According to the present Example, a graph comparing the calculated values of the frequency spectrum of the excitation vibration of the stacked iron core of the transformer with the measured values of the frequency spectrum of the noise obtained by measuring the excitation noise of the stacked iron core of the transformer is illustrated in FIG. 18. The vertical and horizontal axes of the graph in FIG. 18 are the same as in the graph in FIG. 6. In the graph in FIG. 18, it may be said that the calculated values and the measured values match very well, except for the 400 Hz and 700 Hz spectra, which were excluded. This may be considered to strongly suggest that the measured spectral values of 400 Hz and 700 Hz contain a large amount of disturbance noise other than noise due to iron core vibration. The Example confirms that the transverse elastic moduli Gzx and Gyz in two planes including the stacking direction for the upper yoke 22a and the lower yoke 22b of the stacked iron core 21 of the transformer and the transverse elastic moduli Gzx and Gyz in two planes including the stacking direction for the legs 22c of the stacked iron core 21 of the transformer, which are included in the elasticity matrices in the constitutive equation, were determined with high accuracy.

Although embodiments of the present disclosure have been described based on the drawings and Examples, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results. The embodiments according to the present disclosure may be realized as a program executed by a processor provided to a device or as a storage medium on which the program is stored. The scope of the present disclosure should be understood to include these examples.

For example, the method of evaluating the degree of coincidence between the frequency spectrum of the noise of the stacked iron core 21 of the transformer and the frequency spectrum of the excitation vibration of the stacked iron core 21 of the transformer is not limited to calculation of cosine similarity. Euclidean distance may be employed as a method of evaluating the degree of coincidence, for example by taking a dB display reference so as not to include an offset. Further, another method of evaluating the degree of coincidence may be employed, as long as the method essentially quantitatively indicates the degree of coincidence between the frequency spectrum data of the excitation noise and the frequency spectrum date of the excitation vibration.

Further, vibration analysis of a three-phase three-leg transformer was described for the embodiments, but this is not a limitation, and the present disclosure is also applicable to vibration analysis of the stacked iron core in a three-phase five-leg transformer or other transformers.

Further, in the elasticity matrix determination method according to the present embodiment, the transverse elastic moduli of a plurality (two) of portions constituting the stacked iron core 21 are different from each other, and as a specific example, the case where the transverse elastic moduli of the upper yoke 22a and the lower yoke 22b constituting the stacked iron core 21 (first portion) and the legs 22c (second portion are different is described. Of course, a case where the transverse elastic moduli of the upper yoke 22a and the lower yoke 22b constituting the stacked iron core 21 (first portion) and the transverse elastic moduli of the legs 22c (second portion) are the same is included.

Further, according to the present embodiment, a structure in which the stacked iron core 21 including the first portion and the second portion is described as subject to analysis. The stacked iron core 21 may include three or more portions. In other words, the stacked iron core 21 includes at least the first portion and the second portion. When the stacked iron core 21 includes three portions or more, three or more provisional values for the transverse elastic moduli are set, such as a third provisional value in addition to the first provisional value and the second provisional value. A local maximum value of the degree of coincidence is then detected in a map of three or more dimensions.

REFERENCE SIGNS LIST

21 stacked iron core
22 grain-oriented electrical steel sheet (22a: upper yoke, 22b: lower yoke, 22c: legs)
40 vibration analyzer (42: controller, 44: memory, 46: interface)

**Claims**

1. A transformer stacked iron core elasticity matrix determination method, wherein

the stacked iron core is configured as a plurality of electrical steel sheets and includes at least a first portion and a second portion,
a constitutive equation represents a relationship between stress and strain in the first portion and the second portion, respectively, and includes elasticity matrices that are different from each other,
each of the elasticity matrices includes, as elements of the elasticity matrix, transverse elastic moduli in two planes including the stacking direction of the stacked iron core, the transformer stacked iron core elasticity matrix determination method comprising:

a first step of acquiring a frequency spectrum of excitation noise of the stacked iron core of the transformer;
a second step of acquiring a frequency spectrum of excitation magnetostriction of the electrical steel sheets;
a third step of determining, for the stacked iron core of the transformer, a first provisional value of the transverse elastic moduli in two planes including the stacking direction of the first portion and a second provisional value of the transverse elastic moduli in two planes including the stacking direction of the second portion, and calculating a frequency spectrum of a vibration response function of the stacked iron core of the transformer when the first provisional value and the second provisional value are applied to the elasticity matrices;
a fourth step of calculating a frequency spectrum of excitation vibration of the stacked iron core of the transformer, based on frequency spectrum data of the excitation magnetostriction of the electrical steel sheets acquired in the second step and the frequency spectrum of the vibration response function of the stacked iron core of the transformer calculated in the third step;
a fifth step of calculating a degree of coincidence between the frequency spectrum of the noise of the stacked iron core of the transformer acquired in the first step and the frequency spectrum of the excitation vibration of the stacked iron core of the transformer calculated in the fourth step;
a sixth step of calculating the degree of coincidence for each combination of the first provisional value and the second provisional value by changing the first provisional value and the second provisional value respectively and repeating the third step to the fifth step; and
a seventh step of detecting a local maximum value of the degree of coincidence calculated for each combination of the first provisional value and the second provisional value in the sixth step, adopting the first provisional value when the degree of coincidence is a local maximum value as the transverse elastic moduli in two planes including the stacking direction of the stacked iron core of the first portion, and adopting the second provisional value when the degree of coincidence is a local maximum value as the transverse elastic moduli in two planes including the stacking direction of the stacked iron core of the second portion.

2. The transformer stacked iron core elasticity matrix determination method according to claim 1, further comprising:

an eighth step of calculating, when no local maximum value of the degree of coincidence is detected or two or more local maximum values of the degree of coincidence are detected in the seventh step, the degree of coincidence for each combination of the first provisional value and the second provisional value based on frequency components that remain after excluding at least one frequency component from the frequency spectrum of the vibration response function calculated in the third step and the frequency spectrum of the excitation vibration calculated in the fourth step;

a ninth step of detecting a local maximum value of the degree of coincidence calculated for each combination of the first provisional value and the second provisional value in the eighth step;

a tenth step of adopting, when only one local maximum value of the degree of coincidence is detected in the ninth step, the first provisional value when the degree of coincidence is a local maximum value as the transverse elastic moduli in two planes including the stacking direction of the stacked iron core of the first portion, and adopting the second provisional value when the degree of coincidence is a local maximum value as the transverse elastic moduli in two planes including the stacking direction of the stacked iron core of the second portion.

3. The transformer stacked iron core elasticity matrix determination method according to claim 1 or 2, wherein in the fifth step, a cosine value of the angle formed between a first vector whose elements are each frequency component of the frequency spectrum of the noise of the stacked iron core of the transformer and a second vector whose elements are each frequency component of the frequency spectrum of the excitation vibration of the stacked iron core of the transformer is calculated as the degree of coincidence.

4. A vibration analysis method comprising a step of executing vibration analysis of the stacked iron core of the transformer based on a constitutive equation representing the relationship between stress and strain in each of the first portion and the second portion, incorporating the transverse elastic moduli determined by the transformer stacked iron core elasticity matrix determination method according to any one of claims 1 to 3.

# FIG. 1

# FIG. 2A

# FIG. 2B

# FIG. 2C

# FIG. 2D

Z

Y ⊗ → X

$\tau_{zx}$ ⇨

⇦ $\tau_{zx}$

# FIG. 2E

Y

Z ⊙ → X

$\tau_{xy}$ ⇨

⇦ $\tau_{xy}$

# FIG. 2F

Z

X ⊙ → Y

$\tau_{yz}$ ⇨

⇦ $\tau_{z}$

# FIG. 3

```
                    ┌─────────────┐
                    │    START    │
                    └──────┬──────┘
                           │
S1 ┌───────────────────────▼───────────────────────────┐
   │  ACQUIRE NOISE FREQUENCY SPECTRUM MEASUREMENT RESULTS │
   └───────────────────────┬───────────────────────────┘
                           │
S2 ┌───────────────────────▼───────────────────────────┐
   │ ACQUIRE EXCITATION MAGNETOSTRICTION FREQUENCY SPECTRUM DATA │
   └───────────────────────┬───────────────────────────┘
                           │
S3 ┌───────────────────────▼───────────────────────────┐
   │  CALCULATE VIBRATION RESPONSE FUNCTION FREQUENCY SPECTRUM │
   │   FOR PROVISIONAL VALUE OF TRANSVERSE ELASTIC MODULUS │
   └───────────────────────┬───────────────────────────┘
                           │
S4 ┌───────────────────────▼───────────────────────────┐
   │   CALCULATE EXCITATION VIBRATION FREQUENCY SPECTRUM │
   └───────────────────────┬───────────────────────────┘
                           │
S5 ┌───────────────────────▼───────────────────────────┐
   │ CALCULATE DEGREE OF COINCIDENCE BETWEEN NOISE MEASUREMENT RESULT │
   │    AND EXCITATION VIBRATION CALCULATION RESULT │
   └───────────────────────┬───────────────────────────┘
                           │
S6              ◁──────────▼──────────▷ NO
                   MAPPING COMPLETE?
                           │ YES
S7 ┌───────────────────────▼───────────────────────────┐
   │  ADOPT PROVISIONAL VALUE WHEN DEGREE OF COINCIDENCE IS │
   │  LOCAL MAXIMUM VALUE AS TRANSVERSE ELASTIC MODULUS │
   └───────────────────────┬───────────────────────────┘
                           │
                    ┌──────▼──────┐
                    │     END     │
                    └─────────────┘
```

- S1: ACQUIRE NOISE FREQUENCY SPECTRUM MEASUREMENT RESULTS
- S2: ACQUIRE EXCITATION MAGNETOSTRICTION FREQUENCY SPECTRUM DATA
- S3: CALCULATE VIBRATION RESPONSE FUNCTION FREQUENCY SPECTRUM FOR PROVISIONAL VALUE OF TRANSVERSE ELASTIC MODULUS
- S4: CALCULATE EXCITATION VIBRATION FREQUENCY SPECTRUM
- S5: CALCULATE DEGREE OF COINCIDENCE BETWEEN NOISE MEASUREMENT RESULT AND EXCITATION VIBRATION CALCULATION RESULT
- S6: MAPPING COMPLETE?
- S7: ADOPT PROVISIONAL VALUE WHEN DEGREE OF COINCIDENCE IS LOCAL MAXIMUM VALUE AS TRANSVERSE ELASTIC MODULUS

# FIG. 4

```
                        ┌─────────────┐
                        │    START    │
                        └──────┬──────┘
                               │
                               ▼
S8  ┌────────────────────────────────────────────────────────┐
    │                  SELECT FREQUENCY                        │
    └───────────────────────────┬────────────────────────────┘
                               │
                               ▼
S9  ┌────────────────────────────────────────────────────────┐
    │              RECALCULATE DEGREE OF                       │
    │     COINCIDENCE EXCLUDING SELECTED FREQUENCY             │
    └───────────────────────────┬────────────────────────────┘
                               │
                               ▼
S10                                                         NO
    ⟨         ONLY ONE LOCAL MAXIMUM VALUE EXISTS?        ⟩────┐
                               │                               │
                            YES│                               │
                               ▼                               │
S11 ┌────────────────────────────────────────────────────────┐│
    │  ADOPT PROVISIONAL VALUE WHEN DEGREE OF COINCIDENCE IS   ││
    │  LOCAL MAXIMUM VALUE AS TRANSVERSE ELASTIC MODULUS       ││
    └───────────────────────────┬────────────────────────────┘│
                               │
                               ▼
                        ┌─────────────┐
                        │     END     │
                        └─────────────┘
```

# FIG. 5

40

## VIBRATION ANALYZER

42 CONTROLLER

44 MEMORY

46 INTERFACE

EP 4 383 289 A1

# FIG. 6

# FIG. 7

MAGNETOSTRICTION AMPLITUDE

FREQUENCY [Hz]

# FIG. 8

FREQUENCY [Hz]

RESPONSE FUNCTION [dB]

# FIG. 9

EXCITATION VIBRATION CALCULATED VALUE [dBA]

FREQUENCY [Hz]

## FIG. 10A

G₁ (GPa)

G₂ (GPa)

## FIG. 10B

G₁ (GPa)

G₂ (GPa)

EP 4 383 289 A1

# FIG. 11

FIG. 12

EP 4 383 289 A1

*FIG. 13*

EP 4 383 289 A1

*FIG. 14*

EP 4 383 289 A1

# *FIG. 15*

G₂ (GPa)

# *FIG. 16*

G₂ (GPa)

# FIG. 17

G₁ (GPa)

G₂ (GPa)

# FIG. 18

## INTERNATIONAL SEARCH REPORT

| International application No. |
|---|
| **PCT/JP2022/021162** |

### A. CLASSIFICATION OF SUBJECT MATTER

*H01F 41/02*(2006.01)i; *H01F 27/245*(2006.01)i; *G06F 30/23*(2020.01)i
FI: G06F30/23; H01F27/245 150; H01F41/02 B

According to International Patent Classification (IPC) or to both national classification and IPC

### B. FIELDS SEARCHED

Minimum documentation searched (classification system followed by classification symbols)

H01F41/02; H01F27/245; G06F30/23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); IEEE Xplore

### C. DOCUMENTS CONSIDERED TO BE RELEVANT

| Category* | Citation of document, with indication, where appropriate, of the relevant passages | Relevant to claim No. |
|---|---|---|
| A | WO 2019/146554 A1 (JFE STEEL CORP) 01 August 2019 (2019-08-01)<br>entire text, all drawings | 1-4 |
| A | JP 2012-68072 A (JFE STEEL CORP) 05 April 2012 (2012-04-05)<br>entire text, all drawings | 1-4 |
| A | JP 2014-71689 A (JSOL CORP) 21 April 2014 (2014-04-21)<br>entire text, all drawings | 1-4 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/021162**

| Patent document cited in search report | | | Publication date (day/month/year) | Patent family member(s) | Publication date (day/month/year) |
|---|---|---|---|---|---|
| WO | 2019/146554 | A1 | 01 August 2019 | US 2020/0340952 A1 entire text, all drawings EP 3745286 A1 | |
| JP | 2012-68072 | A | 05 April 2012 | (Family: none) | |
| JP | 2014-71689 | A | 21 April 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014071689 A